Europäisches Patentamt

European Patent Office

Office européen des brevets

(11) Publication number: **0 169 633**
A2

# EUROPEAN PATENT APPLICATION

(21) Application number: **85303407.2**

(22) Date of filing: **15.05.85**

(51) Int. Cl.⁴: **G 01 D 5/243**

(30) Priority: **31.05.84 US 617642**

(43) Date of publication of application:
**29.01.86 Bulletin 86/5**

(84) Designated Contracting States:
**DE FR GB**

(71) Applicant: **EATON CORPORATION**
**Eaton Center 111 Superior Ave.**
**Cleveland Ohio 44114(US)**

(72) Inventor: **Egle, Lawrence Eugene**
**321 North Oak**
**Itasca Illinois 60143(US)**

(74) Representative: **Douglas, John Andrew**
**Eaton House Staines Road**
**Hounslow Middlesex TW4 5DX(GB)**

(54) Compact displacement transducer.

(57) An eddy current or phase shift type position sensor (10) employing a metallic sensing member (24) moved axially within the inner region of the coil (14). A single or plural (120, 121) spaced coaxially disposed coils are used. The metal member has the surface thereof configured to provide a desired change in coil circuit impedance with respect to incremental displacement. Cylindrical (224), conically (124) tapered and curved surface (224, 324) members are used to alter the rate of eddy current effect on the sensing coil circuit impedance with displacement.

_Fig. 1_

EP 0 169 633 A2

## COMPACT DISPLACEMENT TRANSDUCER

Background of the Invention

The present invention relates to devices for sensing changes in position or displacement of a mechanism and providing an electrical output signal indicative of the change of position or displacement of the sensed portion of the mechanism.

One known technique for providing an electrical signal indicative of position change is that of a linear potentiometer. However, potentiometers have the disadvantage of requiring a high degree of accuracy in the calibration of moving contacts such as a wiper against a variable resistance wire on strip. Where compactness is a design requisite it has been extremely difficult to provide a low cost potentiometer having a long stroke or movement sensing capability with a high degree of accuracy in a small volume package. Furthermore, it has been desired to eliminate wiper contacts altogether in order to avoid the degradation of accuracy or resolution and problems of calibration shift experienced from wear of the contacts. In particular, the present invention relates to devices which utilize certain contactless electromagnetic phenomena to provide an electrical signal responsive to a moveable metallic member disposed so as to cut the lines of magnetic field generated by the current flowing in a coil arranged in a circuit upon which a predetermined electrical signal is impressed. The metallic member, when subjected to the magnetic field of the coil has eddy currents generated therein which eddy currents are known to have an effect upon the inductance and therefore inductive reactance of the coil and thus the impedance of the coil circuit.

0169633

Changes in the position of the metallic member with respect to the the coil may be detected by providing circuit means for detecting the change in the coil circuit impedance. The change in coil circuit impedance may then be used to generate an electrical signal indicative of the impedence change and thus provide an indication of the change of position or displacement of the metallic member. Such devices are known in the art and are often referred to as eddy current or phase shift sensors.

An example of a known eddy current or phase shift sensor is that described in U.S. Patent 4,112,365 issued to G.L. Larson and W.J. O'Neil and assigned to the Assignee of the present invention. In the aforesaid Larson et al patent, a position detecting system is described in which a metallic member is positioned adjacent the exterior of a sensing coil and is moved with respect to the coil.

The aforesaid known technique for impressing an electrical potential on the coil circuit, or exciting the circuit, employ an oscillator to provide a cycling signal as a reference and for exciting a coil circuit capable of resonating. The voltage of the resonating circuit as influenced by the position of the metal member adjacent the coil is compared with the reference signal to determine the phase shift due to the position of the metal member. The phase shift is then typically used to provide either an analog or digital output signal by suitable techniques well known in the electrical art. Other examples of known techniques for sensing movement or position employing an eddy current device, are those described in U.S. Patent 4,110,732 issued to W.M. Jarocha and W.K. O'Neil and U.S. Patent 4,072,927 issued to W.K. O'Neil, both assigned to the Assignee of the present invention.

The aforesaid known techniques for utilizing eddy currents to provide an indication of position change or displacement have required the metallic member disposed to effect the reactance of a coil to be moveably supported in a region surrounding the coil. Such arrangements have limited the ability to design such a sensor in a small compact configuration. It has thus long been desired to provide an eddy current position or displacement sensing transducer having the components or elements thereof disposed in a compact integral package to enable the sensor to be employed in applications where limited space is available for the sensor. In particular, it has been desired to provide such a compact eddy current transducer for sensing the movement of a pressure responsive means such as a diaphragm employed in pressure sensors for appliances. Other applications include sensing movement of a valve member employed in recirculation of exhaust gas in an internal combustion engine.

Summary of the Invention

The present invention relates to transducers for providing an electrical signal in response to a sensed change of position or displacement of a moveable member. The transducer of the present invention employs the electromagnetic phenomena known as eddy current generation for altering the inductance of a coil in a circuit for creating a circuit impedance change which is detectable electrically to provide an electrical indication of the actual position of the moveable member. The transducer of the present invention employs a single or plurality of pancake-type electrical coils, each connected in a circuit which is electrically excited. The affects of the metallic member as it is moved axially within the interior region of the coil, are detected by electrically monitoring the inpedance of the coil circuit. As the metallic member is moved axially within the coil, the changes in the coil circuit impedance are detected and used to generate an electrical signal proportional to the change in impedance. The generated electrical signal thus provides an output indicative of the position or displacement of the metallic member within the coil.

The present invention employs novel and unique configurations of the metallic member to control or shape the response characteristics of the impedance change in the coil circuit as a function of displacement of the metallic member, rather than employing electrical circuit expendants for providing the desired signal response as a function of displacement of the metal member.

Where it is desired to provide a linear response of the electrical output signal with respect to displacement of the metal member, the metal member is configured as a conically tapered surface for increasing the density of magnetic lines of force which are transversed by the member as it moves further into the central region of the coil for given increments of displacement. Where a particular nonlinear electrical output signal is required as a function of incremental input displacement of the member, the member may be configured as an exponentially increasing or decreasing transverse section, or a combination of straight cylindrical section and conically tapered sections.

In the embodiments employing plural coils, the coils are disposed in spaced coaxially arrangement and the moveable member may employ dual conically configured surfaces at opposite ends of a connecting rod to move out of one coil and into the other for providing a linear electrical output or non-linear desired relationship with motion of the members. In an alternative embodiment having plural coils, a cylindrical member is disposed initially immersed within one coil. As the member is moved out of the first coil through the space between the coils and into the second coil for a desired initially linear and subsequently nonlinear electrical output is provided with respect to given increments of movement of the member.

The present invention thus provides a unique and novel eddy current displacement transducer wherein the metallic member in which eddy currents are generated is disposed to move axially within the sensing coil. The desired characterisitics of the electrical output signal are provided by configuring the surface of the moveable metal member rather than employing circuit means for electrically shaping the output signal.

Brief Description of the Drawings

Figure 1 is a schematic of the electrical circuit for providing exitation of a single coil resonant circuit and detecting eddy current induced phase shift therein;

Figure 2 is a cross section of one embodiment of the invention employing plural coils having spaced inverted cones on the moveable member;

Figure 3 is a cross section of another embodiment of the invention employing a single coil with a metal member having a combination conical and cylindrical surface configuration;

0169633

Figure 4 is a view similar to Figure 3 showing another embodiment having the metal member surface configured to increase concavely in transverse section;

Figure 5 is a view similar to Figure 3 illustrating another embodiment having the transverse section thereof increasing convexly and asymptotically;

Figure 6 is a section view similar to Figure 3 illustrating another embodiment employing a moveable member having a surface combining a conical tapered portion and external plate flange;

Figure 7 is a view similar to Figure 2 illustrating another embodiment employing plural coils having a cylindrical moveable member disposed therein;

Figure 8 is a plot of the electrical output signal in volts versus position change in millimeters for the embodiment of Figure 2;

Figure 9 is a plot similar to Figure 8 for the embodiment of Figure 3;

Figure 10 is a plot similar to Figure 8 for the embodiment of Figure 4;

Figure 11 is a plot similar to Figure 8 for the embodiment of Figure 5;

Figure 12 is a plot similar to Figure 8 for the embodiment of Figure 6;

Figure 13 is a plot similar to Figure 8 for the embodiment of Figure 7; and,

Figure 14 is a circuit schematic similar to Figure 1 for exitation of the plural coils of the embodiments of Figure 2 and 7.

Detailed Description

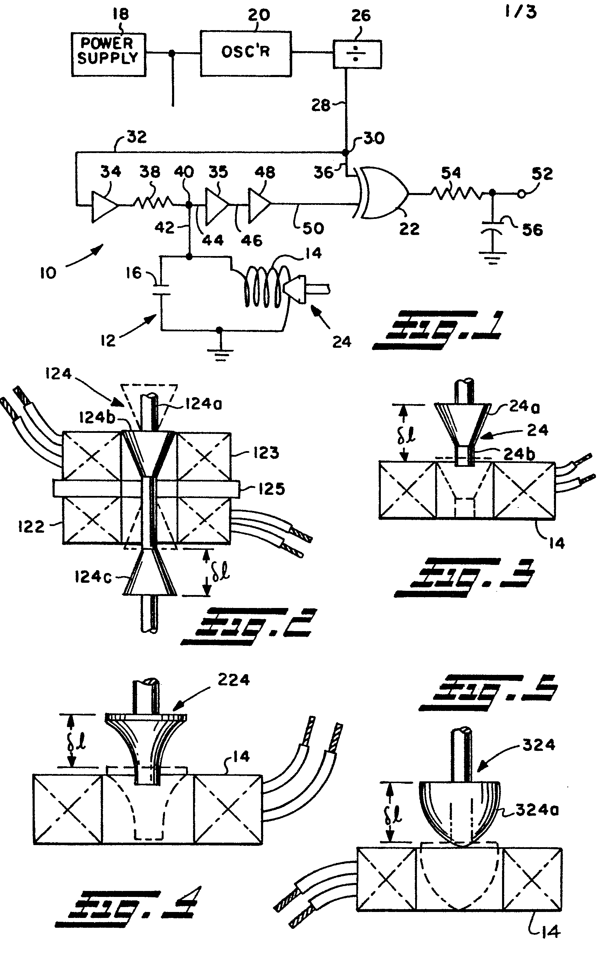

Referring now to Figure 1, the transducer is indicated schematically and generally at 10 as having a resonant coil circuit indicated generally at 12 having a coil 14 electrically in parallel with a capacitor 16. A suitable low voltage power supply 18 supplies an oscillator 20 which provides a first cycling signal; and, a second cycling signal is produced by resonant circuit 12 which is excited by current provided by the first signal. The voltage phase of the second signal is shifted relative to the phase of the first signal by changing impedance of the resonant circuit. A detector or gate 22 produces a cyclic output signal having a duty-cycle representative of the difference in phase of the two signals. The phase of the second signal is altered by the position of a metal moveable member 24 moved axially with in coil 14 for creating eddy currents in the member 24 which alter the impedance of the coil 14, and thus impedance of circuit 12. The configuration and movement of the member 24 will be discussed hereinafter in greater detail.

The output of oscillator 20 is applied to a frequency divider 26, the output of which is applied along line 28 to junction 30 which is connected via lead 32 to the input of a squarewave buffer and driver 34. Junction 30 is also connected, via lead 36, to one input of detector 22 which is an exclusive OR device. The output of the driver 34 is applied through resistor 38 to junction 40 which is connected to the resonant circuit 12 via lead 42 and also to along lead 44 to the input of an amplifier 35. The output of amplifier 35 is provided along lead 46 to the input of zero crossing detector and squarer 48. The output of detector 48 is connected via lead 50 to the remaining input of exclusive OR 22. The output of detector 22 is provided to signal output terminal 52 via series resistor 54 and parallel grounded capacitor 56 which comprise a smoothing network.

The aforesaid circuit techniques for exciting the resonant circuit 12 and detecting the phase shift therein are well known in the art and described as for example in the aforesaid U.S. Patent 4,112,365.

The detector 22 thus provides a voltage having the duty cycle thereof varied to represent changes in the phase shift or impedance of the circuit 12 caused by changes in displacement or position of member 24.

Referring now to Figure 14, an alternate embodiment of the circuit of Figure 1 is shown wherein plural resonant circuits indicated generally at 120, 121 each employ a coil 122, 123 which are disposed coaxially. The circuits 120, 121 are each excited by a cycling signal provided along line 128 from the oscillator 26 to junction 130. Junction 130 is connected to buffer and driver 132 and to buffer and driver 134. The output of the driver 132 is connected through series resistor 136 to junction 138 which is connected via lead 140 to resonant circuit 121. The output of driver 134 is applied through series resistor 142 to junction 144 which is connected via lead 146 to resonant circuit 120.

The signal at junction 138 from circuit 121 is connected to the input of amplifier 148, the output of which is applied through zero crossing detector 150 to one input of the detector 22.

The signal from resonant circuit 120 at junction 144 is applied to the input of amplifier 152, the output of which is applied through zero crossing detector 154 to the remaining input of exclusive OR detector 22.

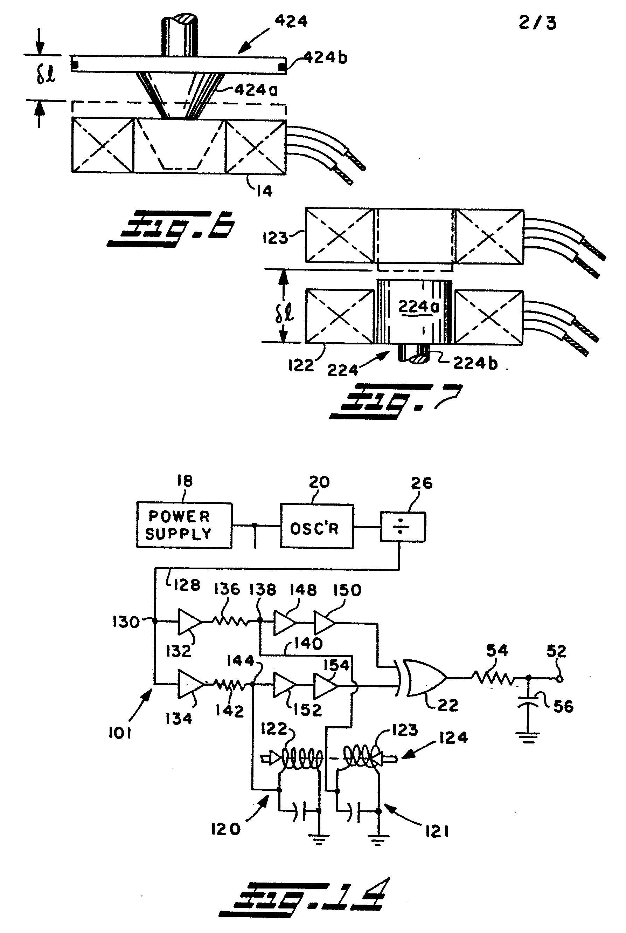

In the embodiment of Figure 14, the detector 22 thus compares the signals from resonant circuits 120, 121 to detect the phase shift of one circuit with respect to the other to thereby provide an output signal. The electromagnetic eddy current coupling of the plural coil embodiments excited by the circuit of Figure 14 will be discussed hereinafter in greater detail with reference to Figures 2 and 7.

It will be understood however, that the employment of two coils in the Figures 2 and 7 embodiments doubles the sensitivity as compared to the single coil embodiments.

Referring now to Figure 2, in one embodiment the plural coils 122, 123 are shown as disposed in coaxial arrangement and spaced axially. A metallic, preferably aluminum, plate washer 125 is disposed therebetween. The aluminum plate 125 has the inner periphery thereof sized to correspond to the inner periphery of the bobbins for the coils 122, 123 and has a thickness or axial height of 1/16th inch (1.57 millimeters). The plate or washer 125 functions to reduce mutual magnetic coupling or "cross-talk" between the coils 122, 123.

In the present practice of the invention, the coils 122, 123 are formed of 200 turns of number 34 copper wire wound over a bobbin having a diameter of .5 inches (12.7 millimeters) and an axial height or length of .150 inches (3.8 millimeters).

The moveable input member indicated generally at 124 in the Figure 2 embodiment, comprises a nonmetallic, preferrably plastic rod 124a having mounted thereon in axially spaced arrangement a pair of metallic cones 124b, 124c, preferably of aluminum. It had been found satisfactory to employ a rod of 1/8 inch (3.2 millimeters diameter). The cones 124b, 124c are disposed with their apexes toward each other and are spaced on the rod 124a such that when one cone is disposed just slightly within the upper coil 123, the cone 124c has its apex just outside lower coil 122. In the present practice of the invention, the cones 124b, 124c have an angle of taper of 19-1/2° with respect to the axis of the cone and have a length of .380 inches (9.6 millimeters) with the smaller diameter thereof coincident with the diameter of the plastic rod 124a, which in the present practice has a diameter of .125 inches (3.17 millimeters) and a larger diameter of .427 inches (10.8 millimeters).

Referring now to Figure 8, for five volt excitation, the output signal and volts is plotted as an ordinate with the displacement or change in position plotted as abscissae in millimeters. The full limit of movement of the member 124 is shown from the solid to the dashed line position in Figure 2. It will be noted that the output signal varies linearly with respect to displacement for the dual cone member of Figure 2. For a total displacement of 12.7 millimeters the Figure 2 embodiment yields a full scale output signal of 4.5 volts.

The embodiment of Figure 2 thus provides a unique configuration and arrangement of the moveable member wherein the cone 124c entering the coil from the initial position shown in solid outline in Figure 2 provides a progressively increasing mass of the metal disposed progressively closer to the inner periphery of the coil to traverse the lines of magnetic force in greater concentration and thereby provide the linear output illustrated in Figure 8.

Where the transducer application is required to accommodate sensing a stroke or position change greater than 16 mm, it will be understood that the coil height or axial length is increased and the axial length of cones 124b, 124c, is also increased accordingly.

The signal output shown graphically in Figure 8 is that measured for a coil and cone arrangement as described with respect to Figure 2 and having the dimensions as set forth hereinabove. It will be understood that coil and cone arrangements having other dimensions and configurations will produce a signal output having characteristics varied from that of Figure 8. For example, if the angle of taper of the cone is increased (e.g. greater than 19-1/2°) the slope of the signal output graph will be steeper than that shown in Figure 8; and, conversely if the taper of the cone is less steep (e.g. less than 19-1/2°) the slope of the signal output graph will be less.

In dual - coil coil embodiments, as shown in Figure 2 and Figure 7, the novel feature of the present transducer 101 wherein the phase shift in the coil circuits 120, 121 (see Figure 19) are detected one relative to the other, renders the present transducer 101 inherently self-temperature compensated were both coils are subject to common ambient conditions.

Referring to Figure 7, the moveable member 224 comprises, in another embodiment, a right circular cylinder 224a, preferably formed of aluminum and attached to a plastic actuating rod 224b.

In the embodiment of Figure 7, the coils 122, 123 have the dimensions and configurations as described hereinabove with respect to the Figure 2 embodiment, but are spaced axially by an airgap of approximately .364 inchs (9.2 millimeters). The aluminum cylinder 224a has a diameter closely fitting the inner periphery of the coil bobbin of approximately .5 inches (12.7 millimeters) and has a axially height of about .270 inches (6.8 millimeters).

In the present practice of the invention, the embodiment of Figure 7 has a member 224a configured so as to extend approximately 1/3 of the distance across the airgap with the member 224a disposed in the initial position fully immersed in the lower coil 122 shown in solid outline in Figure 7.

Upon movement of the member 224 to the position shown in dashed outline in Figure 7, wherein the member 224 has traveled the full limit of its intended displacement to pass through the airgap between the coils and reach a position fully immersed within the upper coil 123. The signal output draft for the embodiment of Figure 7 is illustrated in Figure 13, wherein it will be noted that the member 224 is displaced approximately 6.2 millimeters before any output signal is generated; and, that for approximatey the first 1/2 of the full limit travel of the member 224 the output signal is linear, illustrated as the portion of the curve for $\delta\ell$ in the range 6.2 through 10 millimeters in Figure 13. It will be observed that for $\delta\ell$ = 10 millimeters the moveable member 224 of the Figure 7 embodiment would be centered with respect to the airgap between the coils 122, 123; and, further upward displacement of the member 224 will result in the signal output in accordance with the portion of the curve for $\delta\ell$ in the range 10-16.2 millimeters.

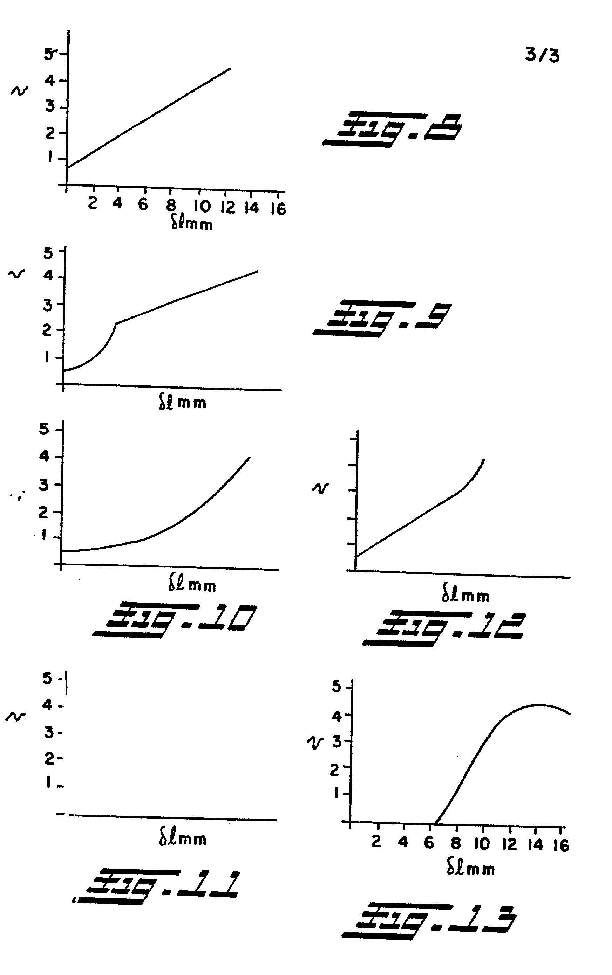

Referring now to Figure 3, an embodiment of the invention 10 of Figure 1 is shown wherein the single coil 14 employs a moveable member 24 comprising a metallic member having a combination conically tapered surface 24a and a cylindrical portion 24b at the apex thereof to provide a different set of characteristics to the electrical output signal. The member 24 is shown in the initial position in Figure 3 in solid outline as having the smaller diameter cylindrical portion 24b just entering the interior region of the coil 14; and, is shown in the limit of its travel in dashed outline in Figure 3 with the cone immersed in the central region of the coil.

It will be understood that, although the coil 14 of Figure 3 has the same configuration and dimensions as described hereinabove with respect to the coils employed for Figure 2, that the moveable member portion 24a has a somewhat steeper angle of taper than the cone described with respect to Figure 2 in order to configure the cone axially to provide the cylindrical portion 24b.

Referring now to Figure 9, the signal output curve for the Figure 3 embodiment is shown. As the cylindrical portion 24b enters the coil, the output voltage increases exponentially to the point "A". Further downward displacement of the member 24, to permit the tapered portion 24a to enter the coil, is shown by the straight line portion of the output voltage graph of Figure 9.

In the present practice, the height of the cylindrical portion 24b has a height or axial length of 1/3 the height of the cone and cylindrical members. By way of example, for a .3 inch, (7.62mm) stroke a 19 1/2° angle cone of .427 inch (10.9mm) base diameter and .20 inch (.51mm) height would be used with a cylindrical portion of .10 inch (2.54mm) height.

Referring now to Figure 4, an alternate embodiment of Figure 1 is shown wherein the coil 14 has the moveable member 224 shaped in the form of an exponentially increasing transverse section body of revolution. The minor diameter thereof is disposed downwardly in Figure 4 to enter the interior region of the coil upon onset of sensed motion. The output signal curve for the embodiment of Figure 4 is illustrated typically in Figure 10.

Referring now to Figure 5, another embodiment of the invention 10 of Figure 1 is shown wherein the moveable member 324 has a concave parabolically increasing transverse section as a body of revolution producing the curved surface 324a of Figure 5.

Referring to Figure 11, the electrical signal output at terminal 52 for the embodiment of Figure 5 is illustrated wherein the voltage increases initially very steeply. Within increasing downward movement of the member 324, the voltage increases less rapidly at an exponential rate and at full scale deflection, the voltage increase approaches a zero rate of increase asymptotically.

Referring now to Figure 6, another embodiment of the invention of Figure 1 is shown wherein the moveable member 424 comprises a conically tapered surface 424a having a plate or flange portion 424b extending radially outwardly from the larger diameter of the conically tapered surface 424a. The embodiment of Figure 6 operates from an initial position shown in solid outline in Figure 6 to a full travel limit position shown in dashed outline, in which the conical portion 424a is fully immersed in the central region of the coil and the plate flange 424b rests adjacent the upper axial face of the coil 14.

In the present practice of the Figure 6 embodiment, invention, for a coil 14 having the above-described dimensional configuration, it has been found satisfactory to employ a cone 424a having a minor diameter of .195 inches (4.95mm) and a major diameter of .427 inches (10.84mm). The plate-flange 424 for such a cone would satisfactorily have an outside diameter of .75 inch (19.05mm) and a thickness of 1/16 inch (1.6mm). It will be understood, however, that other dimensions may be employed as required by the stroke and output signal requirements. In the examples described hereinabove, the .427 (10.84mm) dimension for major cone diameter has been chosen as a matter of convenience only and is not deemed a requirement. It will also be understood that the member 424 may be substituted for each of the cones 124b, 124c, of the Figure 2 embodiment.

The embodiment of Figure 6 provides a variable response output as shown in Figure 12, wherein the output voltage varies linearly with displacement as the cone is immersed in the central region of the coil until the flange 424b is closely adjacent the coil. In this latter position, the mass of the flange and the eddy currents therein override the effect of the eddy currents in portion 424a; and, the output voltage increases exponentially with further displacement as shown in Figure 12.

Although the initial position of the metallic member has been illustrated in the drawing as solid outline and the full limit displaced position has been shown in dashed outline, it will be understood that the transducer 10, 101 described herein will function with the metallic member initially in the dashed line position.

The present invention provides a position transducer having the unique feature that once the excitation - detection circuit is calibrated, changes in the sensitivity and travel may be accommodated by merely changing the configurations of the metallic members without altering the circuit.

The present invention provides a unique eddy current or phase shift displacement transducer in which a metallic member senses the motion input and has portions thereof axially displaced within the central region of the pickup coil. The moveable metallic member of the present invention has the surface thereof configured to control the traverse and effect of the eddy currents on the magnetic field of the coil in such a manner as to provide a desired electrical output of the detecting circuit with respect to given increments of sensed displacement. The present invention provides a unique compact arrangement for an eddy current position sensor by virtue of providing for change of position or displacement of the sensing member within the interior regions of the coil and thereby enables the sensor to have a minimum volume for applications requiring a sensor within limited space.

Although the invention has hereinabove been described with respect to the illustrated embodiments, it will be understood that the invention is capable of modifications and variations therefrom and is limited only by the following claims.

IN THE CLAIMS:

Claim 1.  A displacement transducer (10) comprising:

(a)  means defining a circuit (12) including a coil (14);

(b)  means operative (20, 26, 34) to generate and apply an electrical excitation signal to said circuit;

(c)  displaceable input means (24) including a member formed of electrically conductive material and having a portion thereof disposed in the interior region of said coil, said portion being axially moveable therein in response to an externally applied force, wherein eddy currents are generated in said member portion by the magnetic field in said coil and said eddy currents affect the effective impedance of said circuit, said portion being configured to produce a predetermined change in said impedance for a predetermined amount of axial movement;

(d)  circuit means (22) operable to detect the change in said impedance caused by said axial movement.

Claim 2.  The transducer defined in claim 1, wherein said portion of said member extending into said coil comprises a conically tapered surface configured such that said detector means output is proportional to the axial change in position of said conductive means.

Claim 3.  The transducer defined in claim 1, wherein said elongated member includes a generally cylindrical portion extending within said coil.

Claim 4.  The transducer defined in claim 1, wherein said input means member includes a flat plate portion (424b) extending exteriorly of said coil and transversely of the direction of movement of said input means and said elongated portion extending within said coil includes a conically tapered portion (424a).

Claim 5. A displacement transducer (10) comprising:

(a) means defining a circuit (12) including a coil (14);

(b) means operative (20, 26, 34, 38) to generate and apply an electrical excitation signal to said circuit;

(c) displaceable input means (24) including a member formed of electrically conductive material and having a portion thereof disposed within said coil in spaced arrangement thereto, said member moveable axially with respect to said coil and having a section (24a) tapered in the direction of motion and an adjoining section (24b) of substantially constant transverse dimensions, wherein said periodic signal creates a magnetic field in said coil and eddy currents are created in said member portion which cause a change in the effective impedance of said circuit and upon axial movement of said member portions within said coil said effective impedance is changed linearly with respect to said axial movement; and,

(d) circuit means (22) operative to detect the change in said effective impedance with said movement and operative to provide an output indicative of said impedance change, wherein said output varies lineary with respect to movement of said tapered section in said coil and nonlinearly with respect to movement of said constant section in said coil.

Claim 6. A displacement transducer comprising:

(a) means defining an electrical circuit (12) including a coil (14) and capable of resonating;

(b)  generator means (20, 26, 34, 38) operable to provide a periodic electrical signal and connected to apply said signal to said circuit;

(c)  displaceable input means (24) including a member formed of metallic material and having a portion thereof disposed for axial movement within said coil whereby eddy currents are created therein by the magnetic field of the coil and said eddy currents alter the effective impedance of the circuit;

(d)  circuit means (22) operative to compare said periodic signal with the effect of said eddy currents in said circuit, and operable to provide an output signal indicative of the changes in effect with displacement of said input means.

Claim 7.  The transducer defined in claim 6, wherein said coils are disposed in coaxially closely spaced arrangement.

Claim 8.  The transducer defined in claim 6, wherein said coils are disposed in coaxially spaced arrangement and further comprising a metallic plate disposed intermediate said coils.

Claim 9.  The transducer defined in claim 6, wherein said eddy current portion of said input member has an axially tapered configuration (124b, 124c) for providing a substantially constantly proportional relationship between displacement of said input member and said output signal.

Claim 10. The transducer defined in claim 6, further comprising:

(a)  a plurality of said circuits (120, 121) with the coils thereof disposed in spaced coaxial arrangement;

(b)   said generator means is operable to provide a periodic electrical signal to each of said circuits;

(c)   said comparator circuit means is operative to compare said periodic signal with the effect of said eddy currents on the inductance of each coil; and,

(d)   said input means inclues a metallic member disposed for axial movement within each coil.

Claim 11. The transducer defined in claim 6, wherein said circuit includes a plurality of coils (122, 123) disposed in spaced coaxial arrangement.

Claim 12. The transducer defined in claim 6, wherein said portion of said member within said coil has a nonlinear tapered configuration.

Claim 13. A method of detecting displacement of a member:

(a)   providing a circuit (12) including a coil (14);

(b)   exciting said current with an electrical signal;

(c)   disposing a metallic member (24) of relatively low magnetic permeability with portions of said member within said coil such that eddy currents are generated in said portion and affect the impedance of said circuit; and,

(d)   axially displacing said portion within said coil and detecting the change in said coil impedance.

0169633

1/3

FIG.1

FIG.2

FIG.3

FIG.4

FIG.5

**FIG.6**

**FIG.7**

**FIG.14**

Fig.8

Fig.9

Fig.10

Fig.12

Fig.11

Fig.13